# EUROPEAN PATENT SPECIFICATION

(11) **EP 3 297 254 B1**
(45) Date of publication and mention of the grant of the patent: **14.08.2019**
(21) Application number: 15891660.1
(22) Date of filing: 16.10.2015
(51) Int. Cl.: H04L 12/28, H04L 12/24, H04L 29/12

(54) **DOMAIN NAME SYSTEM (DNS) RESOLUTION PROCESSING METHOD AND DEVICE**
VERFAHREN UND VORRICHTUNG ZUR AUFLÖSUNGSVERARBEITUNG EINES DOMÄNENNAMENSYSTEMS (DNS)
PROCÉDÉ ET DISPOSITIF DE GESTION DE RÉSOLUTION DE SYSTÈME DE NOMS DE DOMAINE (DNS)

(30) Priority: 12.05.2015 CN 201510240494
(43) Date of publication of application: 21.03.2018
(73) Proprietor: ZTE Corporation, Shenzhen, Guangdong 518057 (CN)
(72) Inventor: MENG, Yichao, Shenzhen Guangdong 518057 (CN)
(74) Representative: Studio Torta S.p.A.
(86) International application number: PCT/CN2015/092129
(87) International publication number: WO 2016/179960

(56) References cited:
- CN-A- 101 145 972
- CN-A- 101 931 663
- US-A1- 2009 313 384
- US-A1- 2013 254 425
- US-A1- 2015 052 522
- US-B1- 7 680 876

## Description

### TECHNICAL FIELD

The disclosure relates to the field of communications, and in particular, to a domain name system (DNS) resolution processing method and device.

### BACKGROUND

When using devices like Customer Premise Equipment (referred to as CPE) to access the Internet, especially when multiple users conduct network services frequently at the same time, there will suddenly be no Internet access, but if a detection is performed at the time using network diagnostic tools or diagnostic commands, it will be found that the network link is connected if the detection is performed using the IP address as the target, while the network link is not connected if the detection is performed using the domain name as the target. After verification, it can be determined that the common cause of the failure to access the Internet is that the buffer of the Domain Name System (referred to as DNS) proxy server process of a router device is full and cannot accept a new DNS request. It is to be noted that the buffer is calculated through a set of fixed algorithms, not easy to modify. The buffer is not full in normal circumstances, unless a lot of frequent DNS requests from users are not answered. Therefore, as the DNS proxy server of a routing equipment like CPE works in disorder, even other functions of the equipment are normal, a lot of troubles are still caused to users, equipment manufacturers and operators, resulting in complaints.

At present, there is still no effective solution proposed in the relevant art to solve the problem that the domain name system (DNS) resolution proxy process of a router device cannot perform resolution, causing the user unable to access the Internet.

The section above provides background information related to the present disclosure which is not necessarily prior art.

Patent document US2013/0254425A1 discloses a DNS forwarder for multi-core platforms. However, the above-identified issues are not overcome.

### SUMMARY

The present invention relates to a domain name system (DNS) resolution processing method and device as defined in the appended claims, to solve at least the problem that the DNS resolution proxy process of a router device cannot perform resolution in the related technology, causing a user unable to access the Internet.

According to an embodiment of the present disclosure, there is provided a DNS resolution processing method including:
a router writing a primary DNS resolution server IP address obtained through dialing into a secondary DNS resolution server IP address parameter of a DHCP server process configuration file;
the router receiving a DHCP request from a terminal and assigning the primary DNS resolution server IP address of the router to the secondary DNS resolution server IP address of the terminal. In an embodiment of the present disclosure, said assigning the primary DNS resolution server

IP address of the router to the secondary DNS resolution server address of the terminal includes one of the following:
a DHCP server of the router assigning the primary DNS resolution server IP address of the router to the secondary DNS resolution server IP address of the terminal.

In an embodiment of the present disclosure, the method further includes:
in a case where the router successfully accesses the Internet through dialing, the router writing the primary DNS resolution server IP address into the secondary DNS resolution server IP address parameter of the router of a DHCP service process.

In an embodiment of the present disclosure, the router writing the primary DNS resolution server IP address obtained through dialing into the secondary DNS resolution server IP address parameter of the DHCP server process configuration file includes:
initializing a configuration parameter modification flag bit of the DHCP service process;
closing the DHCP service process, and writing the obtained primary DNS resolution server IP address into the secondary DNS resolution server IP address parameter of the router DHCP service process;
setting the configuration parameter modification flag bit of the DHCP service process to be a specified value;
detecting whether the configuration parameter modification flag bit of the DHCP service process is the specified value, if so, restarting the DHCP process and resetting the flag bit.

In an embodiment of the present disclosure, the method includes:
when the terminal sends the DNS proxy process of the router, when the DNS resolution proxy process of the router works in disorder, the terminal sending the DNS request to the secondary DNS of the terminal to complete a DNS resolution, wherein the secondary DNS is the primary DNS of the router.

According to another embodiment of the present disclosure, there is further provided a DNS resolution processing device including:
a write module configured so that the router writes the primary DNS resolution server IP address obtained through dialing into the secondary DNS resolution server IP address parameter of the DHCP server process configuration file;
an assigning module configured so that the router receives a DHCP request from a terminal and assigns the primary DNS resolution server IP address of the router to the secondary DNS resolution server IP address of the terminal.

In an embodiment of the present disclosure, the assigning module includes:
a first assigning unit configured so that a DHCP server of the router assigns the primary DNS resolution server IP address of the router to the secondary DNS resolution server IP address of the terminal.

In an embodiment of the present disclosure, the device further includes:
a dialing module configured so that, in a case where the router successfully accesses the Internet through dialing, the router writes the primary DNS resolution server IP address into the secondary DNS resolution server IP address parameter of the router of a DHCP service process.

In an embodiment of the present disclosure, the write module includes:
an initialization unit configured to initialize a configuration parameter modification flag bit of the DHCP service process;
a write unit configured to close the DHCP service process, and write the obtained primary DNS resolution server IP address into the secondary DNS resolution server IP address parameter of the router DHCP service process;
a setting unit configured to set the configuration parameter modification flag bit of the DHCP service process to be a specified value;
a detection unit configured to detect whether the configuration parameter modification flag bit of the DHCP service process is the specified value, if so, restart the DHCP process and reset the flag bit.

In an embodiment of the present disclosure, the device includes:
a resolving module configured so that, when the terminal sends the DNS proxy process of the router, when the DNS resolution proxy process of the router works in disorder, the terminal sends the DNS request to the secondary DNS of the terminal to complete a DNS resolution, wherein the secondary DNS is the primary DNS of the router.

With the disclosure, by means of the router writing the primary DNS resolution server IP address obtained through dialing into the secondary DNS resolution server IP address parameter of the DHCP server process configuration file, the router receiving the DHCP request from the terminal, assigning the primary DNS resolution server IP address of the router to the secondary DNS resolution server IP address of the terminal, the problem that the DNS resolution proxy process of the router device cannot perform resolution, causing the user unable to access the Internet, can be solved, ensuring the normal resolution of the user DNS request, improving the quality at which the user uses the router device to conduct network services.

This section provides a summary of various implementations or examples of the technology described in the disclosure, and is not a comprehensive disclosure of the full scope or all features of the disclosed technology

### BRIEF DESCRIPTION OF THE DRAWINGS

The accompanying drawings described hereinabove provide a further understanding of the disclosure and constitute a part of this disclosure, and the illustrative embodiments of the disclosure and the description thereof are intended to be illustrative of the disclosure and are not to be construed as limiting the disclosure. In the drawings:
Figure 1 is a flow chart of a DNS resolution processing method according to an embodiment of the present disclosure;
Figure 2 is a block diagram of the structure of a DNS resolution processing device according to an embodiment of the present disclosure;
Figure 3 is a schematic flow chart of a DNS resolution optimization mechanism according to a preferred embodiment of the present disclosure;
Figure 4 is a schematic flow chart of the implementation of an initialization module according to a preferred embodiment of the present disclosure;
Figure 5 is a schematic flow chart of the implementation of a DHCP parameter configuration module according to a preferred embodiment of the present disclosure;
Figure 6 is a schematic flow chart of the implementation of a DHCP process management module according to a preferred embodiment of the present disclosure.

### DETAILED DESCRIPTION

Hereinafter, the present disclosure will be described in detail with reference to the accompanying drawings combining embodiments. It is to be noted that the embodiments and the features in the embodiments in the present application may be combined with each other without conflict.

It is to be understood that the terms "first", "second" and the like in the description, claims and accompanying drawings of the present disclosure are used for distinguishing similar objects and need not be used to describe a particular order or sequence.

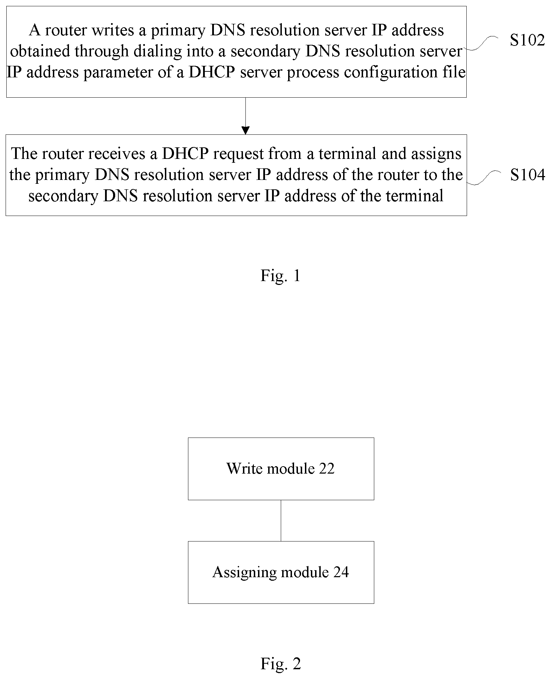

Provided in the embodiments is a DNS resolution processing method. Figure 1 is a flow chart of a DNS resolution processing method according to an embodiment of the present disclosure. As shown in Figure 1, the flow includes the following steps:
step S102, a router writing a primary DNS resolution server IP address obtained through dialing into a secondary DNS resolution server IP address parameter of a DHCP server process configuration file;
step S104, the router receiving a DHCP request from a terminal and assigning the primary DNS resolution server IP address of the router to the secondary DNS resolution server IP address of the terminal.

With the steps described above, the router writing a primary DNS resolution server IP address obtained through dialing into a secondary DNS resolution server IP address parameter of a DHCP server process configuration file and the router assigning the primary DNS resolution server IP address of the router to the secondary DNS resolution server IP address of the terminal, utilize the resolution function of the secondary DNS of the user terminal equipment, solve the problem that the DNS resolution proxy process of the router device cannot perform resolution, causing users unable to access the Internet, and thereby ensure the normal resolution of the user DNS request, improving the quality at which the user uses the router device to conduct network services.

In the present embodiment, it may be the DHCP server of the router that automatically assigns the primary DNS resolution server IP address of the router to the secondary DNS resolution server IP address of the terminal.

In the present embodiment, in a case where the router successfully accesses the Internet through dialing, the router writes the primary DNS resolution server IP address obtained through dialing into the secondary DNS resolution server IP address parameter of a DHCP server process configuration file.

In the present embodiment, the router writing the primary DNS resolution server IP address into the secondary DNS resolution server IP address parameter of the router of the DHCP service process, includes:
initializing a configuration parameter modification flag bit of the DHCP service process;
closing the DHCP service process, and writing the obtained primary DNS resolution server IP address into the secondary DNS resolution server IP address parameter of the router DHCP service process;
setting the configuration parameter modification flag bit of the DHCP service process to be a specified value;
detecting whether the configuration parameter modification flag bit of the DHCP service process is the specified value, if so, restarting the DHCP process and resetting the flag bit.

In the above embodiment, when the terminal sends the DNS proxy process of the router, when the DNS resolution proxy process of the router works in disorder, the terminal sends the DNS request to the secondary DNS of the terminal to complete a DNS resolution, wherein the secondary DNS is the primary DNS of the router.

In the present embodiment, there is further provided a DNS resolution processing device located in a terminal. The device is used to implement the above-described embodiments and preferred embodiments which will not be described again. As used herein, the term "module" may implement a combination of software and/or hardware of a predetermined function. Although the device described in the following embodiments is preferably implemented in software, the implementation in hardware, or a combination of software and hardware, is also possible and envisioned.

Figure 2 is a block diagram of the structure of a DNS resolution processing device according to an embodiment of the present disclosure, as shown in Figure 2, the device including:
a write module 22 configured so that the router writes the primary DNS resolution server IP address obtained through dialing into the secondary DNS resolution server IP address parameter of the DHCP server process configuration file;
an assigning module 24 configured so that the router receives a DHCP request from a terminal and assigns the primary DNS resolution server IP address of the router to the secondary DNS resolution server IP address of the terminal.

Through the above device, the router writes the primary DNS resolution server IP address to the secondary DNS resolution server IP address parameter of the router of the Dynamic Host Configuration Protocol (DHCP) service process, and assigns the primary DNS resolution server IP address of the router to the secondary DNS resolution server IP address of the terminal, utilizes the resolution function of the secondary DNS of the user terminal equipment, solves the problem that the DNS resolution proxy process of the router device cannot perform resolution, which causes users unable to access the Internet, ensures the normal resolution of the user DNS request, and improves the quality at which the user uses the router device to conduct network services.

In the present embodiment, the assigning module 24 includes:
a first assigning unit configured so that a DHCP server of the router assigns the primary DNS resolution server IP address of the router to the secondary DNS resolution server IP address of the terminal.

In the present embodiment, the device further includes:
a dialing module configured so that, in a case where the router successfully accesses the Internet through dialing, the router writes the primary DNS resolution server IP address into the secondary DNS resolution server IP address parameter of the router of a DHCP service process.

In the present embodiment, the write module 22 includes:
an initialization unit configured to initialize a configuration parameter modification flag bit of the DHCP service process;
a write unit configured to close the DHCP service process, and write the obtained primary DNS resolution server IP address into the secondary DNS resolution server IP address parameter of the router of the DHCP service process;
a setting unit configured to set the configuration parameter modification flag bit of the DHCP service process to be a specified value;
a detection unit configured to detect whether the configuration parameter modification flag bit of the DHCP service process is the specified value, if so, restart the DHCP process and reset the flag bit.

In the present embodiment, the device further includes:
a resolving module configured so that, when the terminal sends the DNS proxy process of the router, when the DNS resolution proxy process of the router works in disorder, the terminal sends the DNS request to the secondary DNS of the terminal to complete a DNS resolution, wherein the secondary DNS is the primary DNS of the router.

The present disclosure will now be described in detail with reference to preferred embodiments.

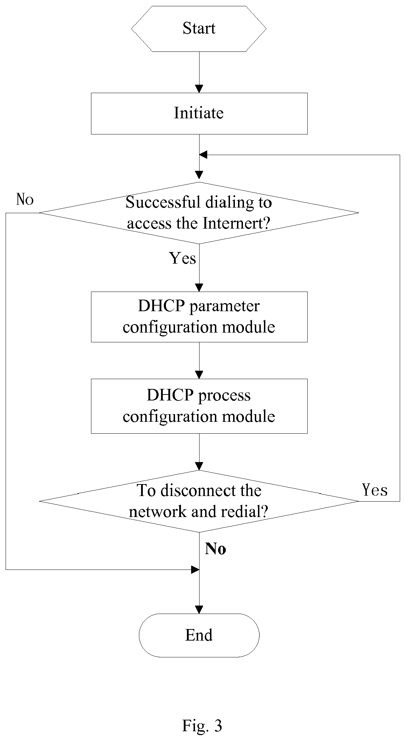

Figure 3 is a schematic flow chart of a DNS resolution optimization mechanism according to a preferred embodiment of the present disclosure. As shown in Figure 3, in the preferred embodiment of the present disclosure, by modifying the configuration parameters of the DHCP server (Server) of the router device, the router writes the primary DNS resolution server IP address obtained through dialing to the secondary DNS resolution server IP address parameter of the DHCP server process configuration file. When the terminal device accessing the router device issues a DHCP request to the router device by means of DHCP, the DHCP server of the router assigns the primary DNS resolution server IP address, obtained through dialing to access the Internet, to the secondary DNS resolution server IP address of the terminal device. Thus when the DNS proxy server of the router device cannot work, the user's DNS request is normally resolved through the secondary DNS resolution server of the terminal device, without the need for any operation from the user. Therefore, this can further ensure the correctness of DNS resolution, reduce unnecessary trouble, and improve user experience.

The preferred embodiment of the disclosure provides a DNS resolution optimization mechanism and device for the purpose of, by modifying the configuration parameters of the DHCP service of the router device such as CPE and UFI, writing the the primary DNS resolution server IP address obtained through dialing by the router device into the secondary DNS resolution server IP address parameter of the DHCP Service of the router device, thereby assigning it to the secondary DNS resolution server address of the user terminal device by means of DHCP. Thus, when the DNS proxy server of the router device such as CPE and UFI cannot work, the DNS request of the user terminal device can be normally resolved. The DNS request of the device can be resolved properly, thereby effectively ensuring the quality of the user's access to the Internet, avoiding a lot of unnecessary trouble. Part of steps of the implementation of a preferred embodiment are as follows:
Step 1, initialization. Clear up the configuration parameter modification flag bit of the DHCP Service.
Step 2, determining whether the dialing is successful, if so, closing the DHCP process, and writing the primary DNS resolution server IP address obtained through dialing to access the Internet into the secondary DNS resolution server IP address parameter of the DHCP server process configuration file (Service) of the router device. The configuration parameter modification flag bit is set to be 1.
Step 3, the DHCP management module detecting whether the DHCP service configuration parameter modification flag bit is 1, if so, restarting the DHCP process and resetting the flag to be 0.
Step 4, then determining whether to disconnect the network and re-dial, if so, repeating step 2 to start a next round of operations.

The technical solution of the preferred embodiment is simple to implement with obvious effect, and can solve the problem that the DNS proxy server of the routing device cannot work so that the user cannot access the Internet, effectively ensuring the quality at which the user uses the router device to conduct the network service, also greatly improving user experience.

The preferred embodiment of the present disclosure includes the following modules: an initialization module, a DHCP parameter configuration module, and a DHCP process management module.

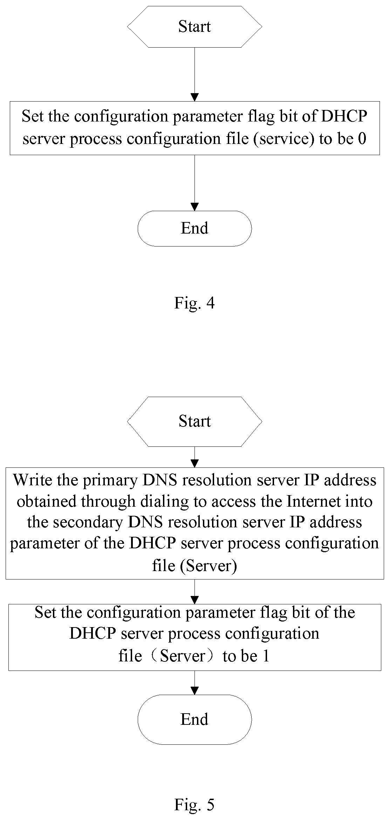

Figure 4 is a schematic flow chart of the implementation of an initialization module according to a preferred embodiment of the present disclosure, as shown in Figure 4, as step 1 described above.

Figure 5 is a schematic flow chart of the implementation of a DHCP parameter configuration module according to a preferred embodiment of the present disclosure, as shown in Figure 5, as step 2 described above.

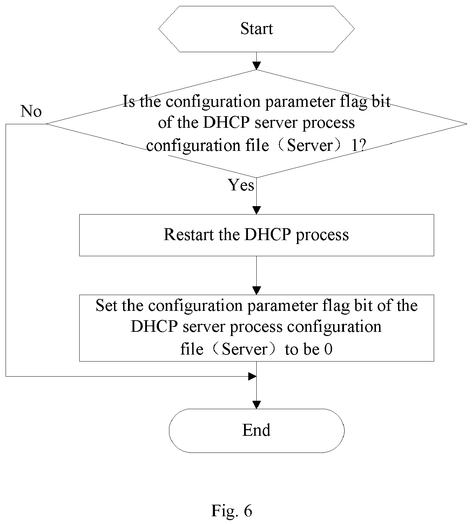

Figure 6 is a schematic flow chart of the implementation of a DHCP process management module according to a preferred embodiment of the present disclosure, as shown in Figure 6, as step 3 described above.

In the preferred embodiment of the present disclosure, the DNS resolution optimization scheme described in the above solution can be replaced so that every time the dialing made by the router device is successful, the user can log in the device to view and dial to access the Internet through a management page or telnet or adb to obtain the primary DNS resolution server IP Address, and then manually configure it to the secondary DNS resolution server IP address of the network card of the user terminal equipment.

The technical solution adopted by the preferred embodiment of the present disclosure, by writing the primary DNS resolution server IP address obtained through each successful dialing into the secondary DNS resolution server IP address parameter of the DHCP server process configuration file (Server) and by assigning it to the secondary DNS resolution server address of the user terminal equipment, can effectively solve the problem that the DNS of the routing device cannot perform resolution so that the user cannot access the Internet, give full play to the secondary DNS resolution function of the user terminal equipment, ensuring the normal resolution of the user's DNS request, further ensuring the quality at which the user uses the router device to conduct network services.

With the description of the above embodiments, it will be apparent to those skilled in the art that the method according to the above embodiments can be implemented by means of software plus necessary general hardware platforms, and of course via hardware, though in many cases the former is better. Based on this understanding, the technical solution of the present disclosure essentially or a part thereof that contributes to the prior art may be embodied in the form of a software product, the computer software product is stored in a storage medium (such as ROM/RAM, magnetic disk, optical disc), including a number of instructions for enabling a terminal device (which may be a mobile phone, a computer, a server, or a network device, etc.) to perform the method of various embodiments of the present disclosure.

Further provided in the embodiments of the present disclosure is a storage medium. Alternatively, in the present embodiments, the above-described storage medium may be configured to store program code for executing the above-described embodiments. Alternatively, in the present embodiments, the above-described storage medium may include, but is not limited to, a USB disk, a read-only memory (ROM), a random access memory (RAM), a mobile hard disk, a magnetic disk or an optical disc and other media that can store the program code.

Alternatively, in the present embodiments, the processor executes the method of the above embodiments according to the program code stored in the storage medium.

It will be apparent to those skilled in the art that the above-described modules or steps of the present disclosure may be implemented by a general purpose computing device, and may be centralized on a single computing device or distributed over a network of multiple computing devices. Alternatively, they may be implemented using program code executable by the computing device, so that they may be stored in a storage device for execution by the computing device, and in some cases, the steps shown or described may be executed in a different order from the order shown here, or individual integrated circuit modules are made correspondingly, or multiple modules or steps therein are implemented by making a corresponding single integrated circuit module. Thus, the present disclosure is not limited to any particular combination of hardware and software.

The foregoing description is merely illustrative of the preferred embodiments of the present disclosure and is not intended to be limiting of the present disclosure. Various changes and modifications may be made by those skilled in the art. Any modifications, equivalent substitutions, improvements, and the like made within the principles of the disclosure are intended to be included within the scope of the present disclosure.

## Claims

1. A domain name system, DNS, resolution processing method, comprising the steps of:
writing (S102), by a router, a primary domain name system, DNS, resolution server IP address obtained through dialing,
into a secondary DNS resolution server IP address parameter of a dynamic host configuration protocol, DHCP, server process configuration file; and
receiving (S104), by the router, a DHCP request from a terminal and assigning the primary DNS resolution server IP address of the router to the secondary DNS resolution server IP address of the terminal,
**characterized in that** the step of writing, by the router, the primary DNS resolution server IP address obtained through dialing into the secondary DNS resolution server IP address parameter of the DHCP server process configuration file comprises:
initializing a configuration parameter modification flag bit of the DHCP service process;
closing the DHCP service process, and writing the obtained primary DNS resolution server IP address into the secondary DNS resolution server IP address parameter of the router DHCP service process;
setting the configuration parameter modification flag bit of the DHCP service process to be a specified value;
detecting whether the configuration parameter modification flag bit of the DHCP service process is the specified value, if so, restarting the DHCP process and resetting the flag bit.

2. The method according to Claim 1, **characterized in that** said step of assigning the primary DNS resolution server IP address of the router to the secondary DNS resolution server address of the terminal comprises:
assigning, by a DHCP server of the router, the primary DNS resolution server IP address of the router to the secondary DNS resolution server IP address of the terminal.

3. The method according to any one of preceding claims, **characterized in that** the method further comprises
in a case where the router successfully accesses the Internet through dialing, writing, by the router, the primary DNS resolution server IP address into the secondary DNS resolution server IP address parameter of the router DHCP service process.

4. The method according to any one of preceding claims, **characterized in that** the method comprises:
when the terminal sends a DNS request to a DNS proxy process of the router, when the DNS resolution proxy process of the router works in disorder, sending, by the terminal, the DNS request to the secondary DNS of the terminal to complete a DNS resolution, wherein the secondary DNS is the primary DNS of the router.

5. A domain name system, DNS, resolution processing device comprising:
a write module (22) of a router configured so that the router writes the primary domain name system, DNS, resolution server IP address obtained through dialing, into the secondary DNS resolution server IP address parameter of a dynamic host configuration protocol, DHCP, server process configuration file;
an assigning module (24) of the router configured so that the router receives a DHCP request from a terminal and assigns the primary DNS resolution server IP address of the router to the secondary DNS resolution server IP address of the terminal,
**characterized in that** the write module (22) comprises:
an initialization unit configured to initialize a configuration parameter modification flag bit of the DHCP service process;
a write unit configured to close the DHCP service process, and write the obtained primary DNS resolution server IP address into the secondary DNS resolution server IP address parameter of the router of the DHCP service process;
a setting unit configured to set the configuration parameter modification flag bit of the DHCP service process to be a specified value;
a detection unit configured to detect whether the configuration parameter modification flag bit of the DHCP service process is the specified value, if so, restart the DHCP process and reset the flag bit.

6. The device according to Claim 5, **characterized in that** the assigning module (24) comprises:
a first assigning unit configured so that a DHCP server of the router assigns the primary DNS resolution server IP address of the router to the secondary DNS resolution server IP address of the terminal.

7. The device according to any one of Claims 5 or 6, **characterized in that** the device further comprises:
a dialing module configured so that, in a case where the router successfully accesses the Internet through dialing, the router writes the primary DNS resolution server IP address into the secondary DNS resolution server IP address parameter of the router DHCP service process.

8. The device according to any one of Claims 5 to 7, **characterized in that** the device comprises:
a resolving module configured so that, when the terminal sends a DNS request to a DNS proxy process of the router, when the DNS resolution proxy process of the router works in disorder, the terminal sends the DNS request to the secondary DNS of the terminal to complete a DNS resolution, wherein the secondary DNS is the primary DNS of the router.

9. A non-transitory computer-readable storage medium, **characterized by** storing instructions which, when executed by a processor, cause the processor to perform a method according to any one of claims 1 to 4.

## Patentansprüche

1. Auflösungsverarbeitungsverfahren eines Domänen-Namensystems, DNS, umfassend die Schritte des:
Schreibens (S102), durch einen Router, einer IP-Adresse eines primären Auflösungsservers eines Domänen-Namensystems, DNS, die durch Wählen erhalten wurde, in einen IP-Adressparameter eines zweiten DNS-Auflösungsservers einer Serverprozesskonfigurationsdatei eines Dynamic Host Configuration Protocols, DHCP; und
Empfangens (S104), durch den Router, einer DHCP-Anfrage von einem Endgerät und Zuweisens der IP-Adresse des primären DNS-Auflösungsservers des Routers zu der IP-Adresse des sekundären DNS-Auflösungsservers des Endgeräts,
**dadurch gekennzeichnet, dass** der Schritt des Schreibens, durch den Router, der IP-Adresse des primären DNS-Auflösungsservers, die durch Wählen erhalten wurde, in den IP-Adressparameter des sekundären DNS-Auflösungsservers der DHCP-Serverprozesskonfigurationsdatei umfasst:
Initialisieren eines Konfigurationsparametermodifikations-Flag-Bits des DHCP-Dienstprozesses;
Schließen des DHCP-Dienstprozesses, und Schreiben der erhaltenen IP-Adresse des primären DNS-Auflösungsservers in den IP-Adressparameter des sekundären DNS-Auflösungsservers des Router-DHCP-Dienstprozesses;
Einstellen des Konfigurationsparametermodifikations-Flag-Bits des DHCP-Dienstprozesses auf einen spezifizierten Wert;
Erkennen, ob das Konfigurationsparametermodifikations-Flag-Bit des DHCP-Dienstprozesses der spezifizierte Wert ist, wenn dem so ist, Neustarten des DHCP-Prozesses und Zurücksetzen des Flag-Bits.

2. Verfahren nach Anspruch 1, **dadurch gekennzeichnet, dass** der Schritt des Zuweisens der IP-Adresse des primären DNS-Auflösungsservers des Routers zu der Adresse des sekundären DNS-Auflösungsservers des Endgeräts umfasst:
Zuweisen, durch einen DHCP-Server des Routers, der IP-Adresse des primären DNS-Auflösungsservers des Routers zu der IP-Adresse des sekundären DNS-Auflösungsservers des Endgeräts.

3. Verfahren nach einem der vorstehenden Ansprüche, **dadurch gekennzeichnet, dass** das Verfahren weiter umfasst
in einem Fall, in dem der Router erfolgreich durch Wählen auf das Internet zugreift, Schreiben, durch den Router, der IP-Adresse des primären DNS-Auflösungsservers in den IP-Adressparameter des sekundären DNS-Auflösungsservers des Router-DHCP-Dienstprozesses.

4. Verfahren nach einem der vorstehenden Ansprüche, **dadurch gekennzeichnet, dass** das Verfahren umfasst:
wenn das Endgerät eine DNS-Anfrage an einen DNS-Proxy-Prozess des Routers sendet, wenn der DNS-Auflösungs-Proxy-Prozess des Routers gestört ist, Senden, durch das Endgerät, der DNS-Anfrage an das sekundäre DNS des Endgeräts, um eine DNS-Auflösung abzuschließen, wobei das sekundäre DNS das primäre DNS des Routers ist.

5. Auflösungsverarbeitungsvorrichtung eines Domänen-Namensystems, DNS, umfassend:
ein Schreibmodul (22) eines Routers, das so konfiguriert ist, dass der Router die IP-Adresse des primären Auflösungsservers eines Domänen-Namensystems, DNS, die durch Wählen erhalten wurde, in den IP-Adressparameter des sekundären DNS-Auflösungsservers einer Serverprozesskonfigurationsdatei eines Dynamic Host Configuration Protocol-, DHCP, schreibt;
ein Zuweisungsmodul (24) des Routers, das so konfiguriert ist, dass der Router eine DHCP-Anfrage von einem Endgerät empfängt und die IP-Adresse des primären DNS-Auflösungsservers des Routers der IP-Adresse des sekundären DNS-Auflösungsservers des Endgeräts zuweist,
**dadurch gekennzeichnet, dass** das Schreibmodul (22) umfasst:
eine Initialisierungseinheit, die dazu konfiguriert ist, ein Konfigurationsparametermodifikations-Flag-Bit des DHCP-Dienstprozesses zu initialisieren;
eine Schreibeinheit, die dazu konfiguriert ist, den DHCP-Dienstprozess zu schließen und die erhaltene IP-Adresse des primären DNS-Auflösungsservers in den IP-Adressparameter des sekundären DNS-Auflösungsservers des Routers des DHCP-Dienstprozesses zu schreiben;
eine Einstelleinheit, die dazu konfiguriert ist, das Konfigurationsparametermodifikations-Flag-Bit des DHCP-Dienstprozesses auf einen spezifizierten Wert einzustellen;
eine Erkennungseinheit, die dazu konfiguriert ist, zu erkennen, ob das Konfigurationsparametermodifikations-Flag-Bit des DHCP-Dienstprozesses der spezifizierte Wert ist, wenn dem so ist, den DHCP-Prozess neu zu starten und das Flag-Bit zurückzusetzen.

6. Vorrichtung nach Anspruch 5, **dadurch gekennzeichnet, dass** das Zuweisungsmodul (24) umfasst:
eine erste Zuweisungseinheit, die so konfiguriert ist, dass ein DHCP-Server des Routers die IP-Adresse des primären DNS-Auflösungsservers des Routers der IP-Adresse des sekundären DNS-Auflösungsservers des Endgeräts zuweist.

7. Vorrichtung nach einem der Ansprüche 5 oder 6, **dadurch gekennzeichnet, dass** die Vorrichtung weiter umfasst:
ein Wählmodul, das so konfiguriert ist, dass in einem Fall, in dem der Router erfolgreich durch Wählen auf das Internet zugreift, der Router die IP-Adresse des primären DNS-Auflösungsservers in den IP-Adressparameter des sekundären DNS-Auflösungsservers des Router-DHCP-Dienstprozesses schreibt.

8. Vorrichtung nach einem der Ansprüche 5 bis 7, **dadurch gekennzeichnet, dass** die Vorrichtung umfasst:
ein Auflösungsmodul, das so konfiguriert ist, dass wenn das Endgerät eine DNS-Anfrage an einen DNS-Proxy-Prozess des Routers sendet, wenn der DNS-Auflösungs-Proxy-Prozess des Routers gestört ist, das Endgerät die DNS-Anfrage an das sekundäre DNS des Endgeräts sendet, um eine DNS-Auflösung abzuschließen, wobei das sekundäre DNS das primäre DNS des Routers ist.

9. Nicht flüchtiges computerlesbares Speichermedium, **dadurch gekennzeichnet, dass** es Anweisungen speichert, die, wenn sie von einem Prozessor ausgeführt werden, den Prozessor veranlassen, ein Verfahren nach einem der Ansprüche 1 bis 4 auszuführen.

## Revendications

1. Procédé de traitement de résolution de système de noms de domaine, DNS, comprenant les étapes de :
écriture (S102), par un routeur, d'une adresse IP de serveur de résolution de système de noms de domaine, DSN, obtenue par composition, dans un paramètre d'adresse IP de serveur de résolution de DNS secondaire d'un fichier de configuration de processus de serveur de protocole de configuration d'hôte dynamique, DHCP ; et
réception (S104), par le routeur, d'une demande DHCP en provenance d'un terminal et attribution de l'adresse IP de serveur de résolution de DNS primaire du routeur à l'adresse IP de serveur de résolution de DNS secondaire du terminal,
**caractérisé en ce que** l'étape d'écriture, par le routeur, de l'adresse IP de serveur de résolution de DNS primaire obtenue par composition dans le paramètre d'adresse IP de serveur de résolution de DNS secondaire du fichier de configuration de processus de serveur DHCP comprend :
l'initialisation d'un bit indicateur de modification de paramètre de configuration du processus de service DHCP ;
la fermeture du processus de service DHCP et l'écriture de l'adresse IP de serveur de résolution de DNS primaire obtenue dans le paramètre d'adresse IP de serveur de résolution de DNS secondaire du processus de service DHCP de routeur ;
la fixation du bit indicateur de modification de paramètre de configuration du processus de service DHCP à une valeur spécifiée ;
la détection si le bit indicateur de modification de paramètre de configuration du processus de service DHCP est la valeur spécifiée, s'il en est ainsi, le redémarrage du processus DHCP et la remise à l'état initial du bit indicateur.

2. Procédé selon la revendication 1, **caractérisé en ce que** ladite étape d'attribution de l'adresse IP de serveur de résolution de DNS primaire du routeur à l'adresse de serveur de résolution de DNS secondaire du terminal comprend :
l'attribution, par un serveur DHCP du routeur, de l'adresse IP de serveur de résolution de DNS primaire du routeur à l'adresse IP de serveur de résolution de DNS secondaire du terminal.

3. Procédé selon l'une quelconque des revendications précédentes, **caractérisé en ce que** le procédé comprend en outre
dans un cas où le routeur accède avec succès à Internet par composition, écriture, par le routeur, de l'adresse IP de serveur de résolution de DNS primaire dans le paramètre d'adresse IP de serveur de résolution de DNS secondaire du processus de service DHCP de routeur.

4. Procédé selon l'une quelconque des revendications précédentes, **caractérisé en ce que** le procédé comprend :
quand le terminal envoie une demande de DNS à un processus de mandataire de DNS du routeur, quand le processus de mandataire de résolution de DNS du routeur travaille dans le désordre, l'envoi, par le terminal, de la demande de DNS au DNS secondaire du terminal pour terminer une résolution de DNS, dans lequel le DNS secondaire est le DNS primaire du routeur.

5. Dispositif de traitement de résolution de système de noms de domaine, DNS, comprenant :
un module d'écriture (22) d'un routeur configuré de sorte que le routeur écrit l'adresse IP de serveur de résolution de système de noms de domaine primaire, DNS, obtenue par composition, dans le paramètre d'adresse IP de serveur de résolution de DNS secondaire d'un fichier de configuration de processus de serveur de protocole de configuration d'hôte dynamique, DHCP ;
un module d'attribution (24) du routeur configuré de sorte que le routeur reçoit une demande DHCP en provenance d'un terminal et attribue l'adresse IP de serveur de résolution de DNS primaire du routeur à l'adresse IP de serveur de résolution de DNS secondaire du terminal,
**caractérisé en ce que** le module d'écriture (22) comprend :
une unité d'initialisation configurée pour initialiser un bit indicateur de modification de paramètre de configuration du processus de service DHCP ;
une unité d'écriture configurée pour fermer le processus de service DHCP et écrire l'adresse IP de serveur de résolution de DNS primaire obtenue dans le paramètre d'adresse IP de serveur de résolution de DNS secondaire du routeur du processus de service DHCP ;
une unité de fixation configurée pour fixer le bit indicateur de modification de paramètre de configuration du processus de service DHCP à une valeur spécifiée ;
une unité de détection configurée pour détecter si le bit indicateur de modification de paramètre de configuration du processus de service DHCP est la valeur spécifiée, s'il en est ainsi, le redémarrage du processus DHCP et la remise à l'état initial du bit indicateur.

6. Dispositif selon la revendication 5, **caractérisé en ce que** le module d'attribution (24) comprend :
une première unité d'attribution configurée de sorte qu'un serveur DHCP du routeur attribue l'adresse IP de serveur de résolution de DNS primaire du routeur à l'adresse IP de serveur de résolution de DNS secondaire du terminal.

7. Dispositif selon l'une quelconque des revendications 5 ou 6, **caractérisé en ce que** le dispositif comprend en outre :
un module de composition configuré de sorte que, dans un cas où le routeur accède avec succès à Internet par composition, le routeur écrit l'adresse IP de serveur de résolution de DNS primaire dans le paramètre d'adresse IP de serveur de résolution de DNS secondaire du processus de service DHCP de routeur.

8. Dispositif selon l'une quelconque des revendications 5 à 7, **caractérisé en ce que** le dispositif comprend :
un module de résolution configuré de sorte que, lorsque le terminal envoie une demande de DNS à un processus de mandataire de DNS du routeur, quand le processus de mandataire de résolution de DNS du routeur travaille dans le désordre, le terminal envoie la demande de DNS au DNS secondaire du terminal pour terminer une résolution de DNS, dans lequel le DNS secondaire est le DNS primaire du routeur.

9. Support de stockage non transitoire lisible par ordinateur, **caractérisé par** stockage d'instructions qui, lorsqu'elles sont exécutées par un processeur, amènent le processeur à effectuer un procédé selon l'une quelconque des revendications 1 à 4.
